# EUROPÄISCHE PATENTSCHRIFT

(11) **EP 4 501 429 B1**
(45) Veröffentlichungstag und Bekanntmachung des Hinweises auf die Patenterteilung: **14.10.2026**
(21) Anmeldenummer: 24192346.5
(22) Anmeldetag: 01.08.2024
(51) Int. Cl.: B01D 35/30, F16L 25/00, F16L 25/14

(54) **ANSCHLUSSSTÜCK UND FILTERMODUL MIT ABSCHLUSSSTÜCK**
CONNECTOR AND FILTER MODUL WITH CONNECTOR
RACCORD ET MODULE DE FILTRATION AVEC RACCORD

(30) Priorität: 03.08.2023 DE 202023104408 U
(43) Veröffentlichungstag der Anmeldung: 05.02.2025
(73) Patentinhaber: Goyer, Rusty S., Tofino, BC V0R 2Z0 (CA)
(72) Erfinder: Goyer, Rusty S., Tofino, BC V0R 2Z0 (CA)
(74) Vertreter: Lohr, Jöstingmeier & Partner Patent- und Rechtsanwälte mbB

(56) Entgegenhaltungen:
- EP-A1- 3 236 126
- WO-A1-2014/148992
- CN-A- 103 711 754
- US-A- 3 268 079
- US-A1- 2003 209 151
- US-A1- 2004 149 666
- US-A1- 2009 267 307
- US-A1- 2021 137 306
- US-B1- 9 402 501

## Beschreibung

### Technisches Gebiet

Die Erfindung betrifft ein Anschlussstück, einen Filterkorb, sowie eine Filtermodul umfassend das Anschlussstück und den Filterkorb bevorzugt für eine Filteranlage eines Whirlpools.

### Stand der Technik

Zur Filtrierung des in einem Whirlpool verwendeten Wassers werden u.a. Vlies oder Papierfilter eingesetzt. In diesen Filtern sammelt sich eine Vielzahl von Schmutzpartikeln an, welche den Filter häufig verstopfen. Vlies und Papierfilter sind nur schwer zu reinigen und müssen daher häufig ausgetauscht und entsorgt werden. Aus der DE 20 2016 008 410 U1 ist eine Filterkartusche bekannt, die zur Aufnahme von losen und wiederverwendbaren Faserfiltermaterial ausgebildet ist. Diese Filterkartusche umfasst einen Behälter, der an seiner oberen Seite eine Abdeckung aufweist, die mit Einlassöffnungen versehen ist. Der Behälter ist seitlich geschlossen. An der Unterseite des Behälters ist ein fester Anschlussflansch vorgesehen, der mit einem Außengewinde versehen ist, über das die Filterkartusche in ein Gewinde eines Pumpanschlusses eines Whirlpools geschraubt werden kann. Bei diesen Filterkartuschen besteht das Problem, dass sobald der Wasserstand im Whirlpool unter die Höhe der Abdeckung sinkt, der Filterbetrieb zum Erliegen kommt, da kein Wasser mehr in den Filter gelangen kann. Ein weiteres Problem dieser Filterkartuschen ist, dass sie immer einen Anschlussflansch benötigen, dessen Gewinde an das entsprechende Gewinde des Pumpanschlusses angepasst ist. Im Bereich der Whirlpools gibt es eine hohe Varianz an möglichen Pumpanschlüssen. Die Gewinde haben unterschiedliche Durchmesser oder auch Grobgewinde oder Feingewinde. Auch einfache Steckverbindungen sind bekannt. Für eine Verbindung des Anschlussflansches mit einem entsprechenden Pumpanschluss muss der Anschlussflansch daher ein entsprechendes Außengewinde aufweisen. Es sind auch Adapter bekannt, die auf einer Seite eine dem Gewinde des Anschlussflansches entsprechendes Innengewinde und auf der anderen Seite ein dem Pumpanschluss entsprechendes Außengewinde aufweisen. Jeder Adapter ist jedoch immer nur für einen Pumpanschluss mit einem bestimmten Gewinde und einen Anschlussflansch mit bestimmten Gewinde geeignet. CN 103 711 754 A, US 2009/267307 A1, WO 2014/148992 A1 und EP 3 236 126 A1 zeigen verschiedene Anschlussstücke.

### Darstellung der Erfindung

Der Erfindung liegt die Aufgabe zugrunde, ein Anschlussstück und ein Filtermodul bereitzustellen, die unabhängig von einer vorgegebenen Anschlussmechanik eingesetzt werden können, einfach zu reinigen sind, einfach zu handhaben sind, eine gute und verlässliche Filterleistung gewährleisten, sowie nachhaltig und günstig sind.

Diese Aufgabe wird durch ein Anschlussstück nach Anspruch 1 gelöst. Vorteilhafte Ausgestaltungen des erfindungsgemäßen Anschlussstücks sind in den Unteransprüchen 2-4 angegeben. Ferner wird diese Aufgabe wird durch ein Filtermodul nach Anspruch 5 gelöst. Vorteilhafte Ausgestaltungen des erfindungsgemäßen Filterkorbs sind in den Unteransprüchen 6-8 angegeben.

Das Anschlussstück hat einen ersten Abschnitt, einen mit dem ersten Abschnitt verbundenen zweiten Abschnitt und eine Mittelachse. Das Anschlussstück ist dazu geeignet als ein Anschlussstück für eine Filteranordnung eines Whirlpools genutzt zu werden. Das Anschlussstück kann mit einem entsprechenden passenden Einlassanschluss einer Filteranordnung verbunden werden. Als Whirlpool im Sinne dieses Dokuments ist ein spezieller Behälter oder eine Wanne zu verstehen, die mit Wasser gefüllt ist und in der Regel über Düsen verfügt, durch die Wasser oder Luft geblasen wird, um eine Massagewirkung zu erzeugen.

Der erste Abschnitt hat einen erste insgesamt in Richtung der Mittelachse verlaufenden Durchgangskanal (erster Durchgangskanal), eine den ersten Durchgangskanal umgebende erste Innenwandung und eine erste Außenwandung. Der erste Durchgangskanal kann eine Außenöffnung (erste Außenöffnung) haben. Durch die erste Außenöffnung kann ein Fluid, beispielsweise Wasser in den ersten Durchgangskanal eintreten oder aus dem ersten Durchgangskanal austreten. Der erste Abschnitt kann einen ersten Innendurchmesser und einen ersten Außendurchmesser haben.

Der zweite Abschnitt hat einen zweiten insgesamt in Richtung der Mittelachse verlaufenden Durchgangskanal (zweiten Durchgangskanal), eine den zweiten Durchgangskanal umgebende zweite Innenwandung und eine zweite Außenwandung aufweist. Der erste Durchgangskanal und der zweite Durchgangskanal sind kommunizierend verbunden. Der zweite Durchgangskanal kann eine Außenöffnung (zweite Außenöffnung) haben. Durch die zweite Außenöffnung kann ein Fluid, beispielsweise Wasser in den zweiten Durchgangskanal eintreten oder aus dem Durchgangskanal austreten. Der zweite Abschnitt kann einen ersten Innendurchmesser und einen ersten Außendurchmesser haben.

Der erste Abschnitt kann mit dem zweiten Abschnitt kommunizierend verbunden sein. Unter kommunizierend wird verstanden, dass ein Fluid, beispielsweise Wasser, in die erste Außenöffnung und/oder den ersten Durchgangskanal einströmen und aus der zweiten Außenöffnung und/oder den zweiten Durchgangskanal austreten kann und/oder eine Flüssigkeit, die in die zweite Außenöffnung und/oder den zweiten Durchgangskanal einströmt aus der ersten Außenöffnung und/oder den zweiten Durchgangskanal austreten kann. Das Anschlussstück ist dazu geeignet, dass bei der Verwendung in einem Whirlpool das verwendete Wasser das Anschlussstück durchströmen kann. Die erste Außenöffnung des Anschlussstücks kann der Einlass des Anschlussstücks sein und die zweite Außenöffnung des Anschlussstücks kann der Auslass des Anschlussstücks sein. Die zweite Außenöffnung des Anschlussstücks kann der Einlass des Anschlussstücks sein und die erste Außenöffnung des Anschlussstücks kann der Auslass des Anschlussstücks sein. In der Anwendung in einer Filteranordnung kann beispielsweise Wasser durch den Einlass in das Anschlussstück einströmen und durch den Auslass ausströmen. Das Anschlussstück kann einen Fluidkanal ausbilden, wobei die Strömungsrichtung des Fluids von der ersten Außenöffnung zur zweiten Außenöffnung oder von der der zweiten Außenöffnung zur ersten Außenöffnung verlaufen kann. Die erste Außenöffnung und die zweite Außenöffnung können koaxial zu der Mittelachse angeordnet sein. Der erste Durchgangskanal und der zweite Durchgangskanal können koaxial zur Mittelachse angeordnet sein. Der erste Durchgangskanal und der zweite Durchgangskanal können auch in einem Winkel zueinander angeordnet sein. Dieser Winkel kann beispielsweise 90 Grad betragen. Der erste Innendurchmesser kann kleiner sein als der zweite Innendurchmesser. Der erste Außendurchmesser kann kleiner sein als der zweite Außendurchmesser. Wie üblich entspricht der jeweilige Innendurchmesser dem Abstand zwischen den Schnittpunkten einer orthogonal durch die Mittelachse verlaufenden Geraden mit der Innenwandung des jeweiligen Abschnitts. Der Außendurchmesser entspricht dem Abstand zwischen den Schnittpunkten einer orthogonal durch die Mittelachse verlaufenden Geraden mit der Außenwandung des jeweiligen Abschnitts.

Die unterschiedlichen Durchmesser haben den Vorteil, dass das Anschlussstück mit unterschiedlichen und variierenden Einlassanschlüssen einer Pumpvorrichtung einer Filteranordnung verbunden werden kann.

Der erste Abschnitt kann einen Innendurchmesser von 30mm - 35mm, bevorzugt 33mm aufweisen. Der erste Abschnitt kann einen Außendurchmesser von 31,5mm - 36,5mm, bevorzugt 34,5mm aufweisen. Der zweite Abschnitt kann einen Innendurchmesser von 40mm - 45mm, bevorzugt 43mm aufweisen. Der zweite Abschnitt kann einen Außendurchmesser von 41,5mm - 46,5mm, bevorzugt 44,5mm aufweisen. Aufgrund von Fertigungstoleranzen können die Durchmesser um einen Betrag von +/- 2mm abweichen.

Der erste Abschnitt und/oder der zweite Abschnitt können jeweils eine zylindrische Form haben. Bevorzugt können der erste Abschnitt und/oder der zweite Abschnitt jeweils eine kreiszylindrische Form haben. Die erste Innenwandung und/oder die zweite Innenwandung können eine zylindrische, bevorzugt kreiszylindrische Fläche ausbilden. Die erste Außenwandung und/oder die zweite Außenwandung können eine zylindrische, bevorzugt kreiszylindrische Fläche ausbilden. In einer Ausführungsform können der erste Abschnitt und/oder der zweite Abschnitt und/oder die erste Innenwandung und/oder die zweite Innenwandung und/oder die erste Außenwandung und/oder die zweite Außenwandung einen Kegelstumpf ausbilden. In einer Ausführungsform kann die erste Außenwandung und/oder die zweite Außenwandung einen Kegelstumpf ausbilden und die erste Innenwandung und/oder die zweite Innenwandung können eine zylindrische, bevorzugt kreiszylindrische Fläche ausbilden.

Der erste Durchgangskanal kann stufenförmig in den zweiten Durchgangskanal übergehen. Das Anschlussstück kann an diesem Übergang eine Ringstufe ausbilden. Die Ringstufe kann durch die Differenz des ersten Innendurchmessers und des zweiten Innendurchmessers ausgebildet sein. Die Ringstufe kann das Anschlussstück in den ersten Abschnitt und in den zweiten Abschnitt unterteilen. Der erste Abschnitt oder der zweite Abschnitt kann an der Ringstufe in den zweiten Abschnitt oder den ersten Abschnitt übergehen. Der stufenförmige Übergang hat den Vorteil, dass das Anschlussstück einfacher zu fertigen ist und dass das Anschlussstück einfacher mit Einlassanschlüssen einer Pumpvorrichtung einer Filteranordnung verbunden werden kann.

Das Anschlussstück kann ein Mittelteil aufweisen. An der Verbindung des ersten Abschnitts und des zweiten Abschnitts kann ein Mittelteil ausgebildet sein. Das Mittelteil kann sich wenigstens teilweise weiter - bevorzugt senkrecht zur Mittelachse - nach außen erstrecken als der erste Abschnitt und/oder der zweite Abschnitt. Der erste Abschnitt und der zweite Abschnitt können durch das Mittelteil verbunden sein. Das Mittelteil kann mit dem ersten Abschnitt und/oder dem zweiten Abschnitt einstückig ausgebildet sein. Das Mittelteil kann mit dem ersten Abschnitt und/oder dem zweiten Abschnitt durch einen Formschluss oder Stoffschluss verbunden sein. Das Mittelteil kann ein bundförmiger Vorsprung sein, der sich bevorzugt senkrecht zur Mittelachse nach außen erstreckt. Das Mittelteil kann an der Außenfläche des ersten Abschnitts und/oder an der Außenfläche des zweiten Abschnitts einen Vorsprung, beispielsweise einen Kranz, ausbilden. Das Mittelteil kann einen größeren Außendurchmesser aufweisen als der erste Außendurchmesser und der zweite Außendurchmesser. Das Mittelteil kann einen Außendurchmesser von 62mm - 84mm aufweisen. Bevorzugt hat das Mittelteil einen Außendurchmesser von 82mm. Das Mittelteil hat den Vorteil, dass das Anschlussstück einfacher und stabiler mit einem Filterkorb in Eingriff gebracht und/oder verbunden werden kann. Zudem kann das Anschlussstück einfacher von einem Filterkorb getrennt werden. Dies erleichtert zudem die Reinigung des Anschlussstücks.

Der erste Abschnitt hat eine erste Ummantelung und der zweite Abschnitt hat eine zweite Ummantelung. Die erste Ummantelung weist eine erste Außenmantelfläche und einen ersten minimalen Außendurchmesser auf und die zweite Ummantelung weist eine zweite Außenmantelfläche und einen zweiten minimalen Außendurchmesser auf.

Die erste Ummantelung und die zweite Ummantelung können eine kreisförmige Querschnittsfläche aufweisen. Die erste Ummantelung kann eine erste Innenfläche und eine erste Außenmantelfläche aufweisen. Die zweite Ummantelung kann eine zweite Innenfläche und eine zweite Außenmantelfläche aufweisen. Die erste Ummantelung kann die erste Außenwandung umgeben. Die zweite Ummantelung kann die zweite Außenwandung umgeben. Die erste Innenfläche und die zweite Innenfläche der jeweiligen Ummantelung können an der Außenwandung des jeweiligen Abschnitts anliegen. Die jeweilige Ummantelung kann mit dem jeweiligen Abschnitt durch einen Stoffschluss, oder Formschluss oder Reibschluss verbunden sein. Die erste Ummantelung und die zweite Ummantelung können zumindest teilweise am Mittelteil anliegen.

Der erste Abschnitt und der zweite Abschnitt bestehen aus einem ersten Material. Die erste Ummantelung und die zweite Ummantelung bestehen aus einem zweiten Material. Das erste Material kann einen größeren mechanischen Widerstand aufweisen als das zweite Material. Das erste Material kann eine geringere Verformbarkeit, insbesondere elastische Verformbarkeit, als das zweite Material und/oder das erste Material kann eine größere Härte auf als das zweite Material aufweisen. Das erste Material kann aus einem härteren Material als das zweite Material bestehen. Dies hat den Vorteil, dass sich die jeweilige Ummantelung einer entsprechenden Verbindung, beispielsweise Schraub- oder Steckverbindung, eines entsprechenden Einlassanschlusses einer Pumpvorrichtung einer Filteranordnung eines Whirlpools anpassen kann. Zudem hat das zweite Material den Vorteil, dass es die Verbindungsstelle von Einlassanschluss und Anschlussstück, also den Bereich zwischen Einlassanschluss und der jeweiligen Mantelfläche, fluiddicht abschließt. Da die Ummantelung kein Gewinde aufweist, ist das Anschlussstück zudem leichter zu reinigen, da das Anschlussstück weniger Vertiefungen und/oder Unregelmäßigkeiten in der Oberfläche aufweist. Das erste Material und/oder das zweite Material können ein Kunststoff sein. Das erste Material kann Polypropylen (PP) sein. In einer Ausführungsform kann das erste Material Polyethylen (PE) sein. In einer alternativen Ausführungsform kann das erste Material ein Metall sein. Das zweite Material kann ein Thermoplastisches Elastomer (TPE) sein. Das zweite Material kann eine SHORE Härte, vorzugsweise SHORE A Härte, von 10 - 70, bevorzugt 30 - 40 aufweisen, besonders bevorzugt 35 haben. Bei einer SHORE Härte von 30 - 40 kann ein Gewinde optimal die jeweilige Ummantelung verformen, ohne diese zu beschädigen. Bei einem Wert von 35 kann hierfür als optimal angesehen werden. Das Mittelteil kann zumindest teilweise aus dem zweiten Material bestehen. Das Mittelteil kann einen aus fertigungstechnischen Gründen ausgebildeten Kanal mit dem zweiten Material aufweisen. Ein solcher Kanal kann beispielsweise durch ein Spritzgussverfahren entstehen. In einer Ausführungsform kann das Mittelteil aus dem zweiten Material bestehen.

Die Außenmantelflächen der Ummantelungen sind jeweils als Mantelfläche eines Kegelstumpfs ausgebildet sind, wobei die minimalen Außendurchmesser der Ummantelungen unterschiedlich groß sind.

Die erste Ummantelung und die zweite Ummantelung können konisch zulaufen. Die erste Ummantelung und/oder die zweite Ummantelung können die Mantelfläche eines Kegelstumpfs, vorzugsweise eines Kreiskegelstumpfs, haben. Die erste Außenmantelfläche und/oder die zweite Außenmantelfläche können als Mantelfläche eines Kegelstumpfs, vorzugsweise eines Kreiskegelstumpfs, ausgebildet sein. In einer Ausführungsform kann die erste Außenmantelfläche und/oder die zweite Außenmantelfläche einen Kegelstumpf ausbilden und die erste Innenfläche und/oder die zweite Innenfläche können eine zylindrische, bevorzugt kreiszylindrische Fläche ausbilden. Die erste Ummantelung und/oder die zweite Ummantelung können konzentrisch um die Mittelachse angeordnet sein. Dies hat den Vorteil, dass das Anschlussstück universell einsetzbar ist, da das Anschlussstück durch die Ausbildung der Mantelflächen als Kegelstumpf und/oder durch das konische zulaufen der jeweiligen Mantelfläche mit Einlassanschlüssen jeglicher Größe und Verbindungsart verwendet werden kann. Zudem ist das Anschlussstück einfacher in einen korrespondierenden Einlassanschluss einführbar und verbindbar.

Die erste Ummantelung kann einen minimalen Außendurchmesser und einen maximalen Außendurchmesser aufweisen. Die zweite Ummantelung kann einen minimalen Außendurchmesser und einen maximalen Außendurchmesser aufweisen. Der maximale Außendurchmesser der ersten Ummantelung kann kleiner sein als der maximale Außendurchmesser der zweiten Ummantelung. Der minimale Außendurchmesser der ersten Ummantelung kann kleiner sein als der minimale Außendurchmesser der zweiten Ummantelung. Die Unterschiedlichen Außendurchmesser haben den Vorteil, dass das Anschlussstück mit Einlassanschüssen verschiedener Größe verbunden werden kann, und dass das Anschlussstück mit einer Vielzahl variabler Einlassanschlüsse verbunden werden kann. Das Anschlussstück kann demnach für eine Vielzahl von Einlassanschlüssen verwendet werden.

Die erste Ummantelung und/oder die zweite Ummantelung können einen minimalen Außendurchmesser von 40mm - 60mm aufweisen. Vorzugsweise kann die erste Ummantelung einen minimalen Außendurchmesser von 42mm - 47mm, besonders bevorzugt 45mm aufweisen. Vorzugsweise kann die zweite Ummantelung einen minimalen Außendurchmesser von 52mm - 57mm, besonders bevorzugt 55mm, aufweisen. Die erste Ummantelung und/oder die zweite Ummantelung können einen maximalen Außendurchmesser von 45mm - 70mm aufweisen. Vorzugsweise kann die erste Ummantelung einen maximalen Außendurchmesser von 48mm - 52mm, besonders bevorzugt 50mm aufweisen. Vorzugsweise kann die zweite Ummantelung einen maximalen Außendurchmesser von 60mm - 64mm, besonders bevorzugt 60mm, aufweisen. Aufgrund von Fertigungstoleranzen können die bevorzugten und besonders bevorzugten Durchmesser um einen Betrag von +/- 2mm abweichen. Die erste Ummantelung und die zweite Ummantelung können jeweils einen Innendurchmesser aufweisen. Der Innendurchmesser der ersten Ummantelung kann dem Außendurchmesser des ersten Abschnitts entsprechen. Der Innendurchmesser der zweiten Ummantelung kann dem Außendurchmesser des zweiten Abschnitts entsprechen. Der Außendurchmesser der ersten Ummantelung kann ausgehend von der ersten Außenöffnung entlang der Mittelachse in Richtung des Mittelteils zunehmen, insbesondere kontinuierlich zunehmen. Der Außendurchmesser der zweiten Ummantelung kann ausgehend von der zweiten Außenöffnung entlang der Mittelachse in Richtung des Mittelteils zunehmen, insbesondere kontinuierlich zunehmen. Die erste Ummantelung kann sich zum freien Ende des ersten Abschnitts verjüngen und/oder die zweite Ummantelung kann sich zum freien Ende des zweiten Abschnitts hin verjüngen. Das jeweilige freie Ende entspricht dem Ende des jeweiligen Abschnitts, dass nicht mit dem anderen Abschnitt verbunden ist. Die erste Ummantelung kann sich zur ersten Außenöffnung hin verjüngen und/oder die zweite Ummantelung kann sich zur zweiten Außenöffnung hin verjüngen. Die erste Außenmantelfläche und/oder die zweite Außenmantelfläche können jeweils in einem Winkel zu der Mittelachse ausgebildet sein. Die erste Außenmantelfläche und/oder die zweite Außenmantelfläche können jeweils eine Mantellinie aufweisen. Die Mittelachse und die jeweilige Mantellinie können jeweils einen Winkel ausbilden. Die erste Außenmantelfläche kann eine erste Mantellinie aufweisen und die zweite Außenmantelfläche kann eine zweite Mantellinie aufweisen. Der zwischen der ersten Mantellinie und der Mittelachse ausgebildete Winkel (erster Winkel) kann kleiner sein als der zwischen der zweiten Mantellinie und der Mittelachse ausgebildete Winkel (zweiter Winkel). Der erste Winkel und der zweite Winkel können ein spitzer Winkel sein. Der erste Winkel und der zweite Winkel kann 3° - 115°, 15° -25°, 25° - 35°, 35° - 45°, 45° - 55°oder > 55° betragen. Der Winkel kann je nach Anwendungsfall variieren. Bevorzugt betragen der erste Winkel und der zweite Winkel 3° - 15°, besonders bevorzugt 3 - 10°, ausgebildet. Bevorzugt kann der erste Winkel 3° - 10° betragen, besonders bevorzugt 5° - 7°. Bevorzugt kann der zweite Winkel 7° - 12° betragen, besonders bevorzugt 8° - 10°. Auf diese Weise kann das Anschlussstück in optimaler Weise in einen entsprechenden passenden Fluidströmungsanschluss und/oder Einlassanschluss eingeführt werden und die dichteste Verbindung zwischen ihnen herstellen. Zudem kann das Anschlussstück mit den bevorzugten und besonders bevorzugten Winkeln am einfachsten mit einer Vielzahl variabler Einlassanschlüssen und/oder Fluidströmungsanschlüssen verbunden werden. Aufgrund von Fertigungstoleranzen können die jeweiligen um einen Betrag von +/- 2° abweichen.

Das Anschlussstück kann geeignet sein mit einem entsprechenden passenden Einlassanschluss einer Pumpvorrichtung einer Filteranlage oder Filteranordnung eines Whirlpools verbunden zu werden und eine fluiddichte und/oder flüssigkeitsdichte Verbindung herzustellen. Die Begriffe Filteranlage und Filteranordnung können austauschbar benutzt werden. Das Anschlussstück ist dazu geeignet mit einer entsprechenden Schraub- oder Steckverbindung verbunden zu werden.

Das Anschlussstück ist dazu geeignet in einer ersten Position oder in einer zweiten Position mit einem entsprechenden Einlassanschluss einer Pumpvorrichtung einer Filteranordnung eines Whirlpools verbunden zu werden. Die erste Position kann den ersten Abschnitt und die erste Ummantelung umfassen. Die zweite Position kann den zweiten Abschnitt und die zweite Ummantelung umfassen. Die erste Ummantelung und/oder die zweite Ummantelung kann dazu geeignet sein mit einem entsprechenden Einlassanschluss einer Pumpvorrichtung einer Filteranordnung eines Whirlpools verbunden zu werden. Die erste Ummantelung und/oder die zweite Ummantelung kann sich der entsprechenden Schraub- oder Steckverbindung des Einlassanschlusses der Pumpvorrichtung anpassen. Durch die geringe härte, bzw. den geringen mechanischen Widerstand des zweiten Materials, kann beispielsweise ein Gewinde in die erste Ummantelung oder die zweite Ummantelung eindringen und/oder diese verformen. Ein Gewinde kann je nach Gewindedurchmesser in die erste Ummantelung oder die zweite Ummantelung eingreifen. Das Gewinde kann die erste Ummantelung oder zweite Ummantelung verformen, beispielsweise eindrücken. Wird das Anschlussstück in ein einen Einlassanschluss mit Gewinde eingebracht, so kann die erste Ummantelung oder die zweite Ummantelung je nach Gewindeart verformt werden und sich der jeweiligen Gewindeart anpassen. Wird die Verbindung wieder gelöst und das Anschlussstück und das Einlassanschluss wieder getrennt, können die erste Ummantelung und/oder die zweite Ummantelung wieder in die Ursprungsform zurückkehren. Das Anschlussstück kann unabhängig von der Gewindeeigenschaft des Einlassanschlusses eine fluiddichte und/oder flüssigkeitsdichte Verbindung ausbilden. Die erste Ummantelung und die zweite Ummantelung können eine größere Dicke als die Gewindehöhe eines entsprechenden Einlassanschlusses aufweisen. Die Dicke der Ummantelung kann der Differenz zwischen dem jeweiligen Außendurchmesser des jeweiligen Abschnitts und dem jeweiligen minimalen Durchmesser und maximalen Außendurchmesser der jeweiligen Ummantelung entsprechen. Der maximale Außendurchmesser der jeweiligen Ummantelung kann größer sein als der Innendurchmesser des entsprechenden Einlassanschlusses. Vorzugsweise ist der maximale Außendurchmesser der jeweiligen Ummantelung größer als der Außendurchmesser des entsprechenden Einlassanschlusses, um eine fluiddichte Verbindung herzustellen. Der minimale Außendurchmesser der jeweiligen Ummantelung kann kleiner sein als der Innendurchmesser des entsprechenden Einlassanschlusses, um eine einfache Einführung in das Gewinde des entsprechenden Einlassanschlusses zu gewährleisten, wenn das Anschlussstück in das Gewinde des entsprechenden Einlassanschlusses eingebracht, vorzugsweise eingedreht wird. Das Anschlussstück kann für Feingewinde, Regelgewinde und/oder Grobgewinde verwendet werden. Das Anschlussstück kann für rechtsgängige und/oder linksgängige Gewindearten verwendet werden. Das Anschlussstück kann SAE, UNF und/oder NPT-Gewindearten verwendet werden.

Je nach Art des entsprechenden Einlassanschlusses kann die erste Ummantelung oder die zweite Ummantelung mit diesem verbunden werden. Dies ist abhängig vom Außendurchmesser des jeweiligen Gewindes und/oder Verbindungsmittel. So ist es möglich das Anschlussstück mit einem entsprechenden Fluidanschluss beliebiger Art und Gewindegröße zu verbinden und eine fluiddichte und/oder flüssigkeitsdichte Verbindung herzustellen. Das Anschlussstück stellt somit ein unabhängig von der Gewindeart einsetzbares Anschlussstück dar, welches günstig, einfach zu handhaben und universell einsetzbar ist.

Die erste Ummantelung und/oder die zweite Ummantelung können wenigstens eine Nut aufweisen. Vorzugsweise können die erste Ummantelung und/oder die zweite Ummantelung wenigstens zwei Nuten aufweisen. In einer Ausführungsform weisen die erste Ummantelung und/oder die zweite Ummantelung zwei Nuten auf. Die erste Ummantelung und/oder die zweite Ummantelung können auch drei, vier oder mehr Nuten aufweisen. Vorzugsweise weist nur die zweite Ummantelung wenigstens eine Nut auf. Die wenigstens eine Nut kann entlang der ersten Ummantelung und/oder zweiten Ummantelung in axialer Richtung verlaufen. Die wenigstens eine Nut kann wenigstens ein Feststellelement aufweisen. Das wenigstens eine Feststellelement kann in der wenigstens einen Nut angeordnet sein. Das Feststellelement kann ein Steg, eine Noppe, ein Vorsprung oder eine Ausbuchtung in der wenigstens einen Nut sein. Das Feststellelement kann perpendikular zur Mittelachse verlaufen. Die Anzahl der Feststellelemente kann der Anzahl an Nuten entsprechen. Dadurch ist es alternativ möglich das Anschlussstück mit einem entsprechenden Fluidanschluss über eine Steckverbindung zu verbinden.

Das Anschlussstück stellt somit ein unabhängig von der Anschlussart einsetzbares Anschlussstück dar, welches günstig, einfach zu handhaben und universell einsetzbar ist.

Das Mittelteil kann eine Umfangsfläche aufweisen. Wenigsten ein Arretiermittel kann an der Umfangsfläche des Mittelteils angeordnet sein. Das Mittelteil kann einen Umfang mit einer Umfangsfläche aufweisen. Entlang der Umfangsfläche des Mittelteils kann wenigstens ein Arretiermittel angeordnet sein. Die Umfangsfläche kann ein, zwei, drei, vier oder N Arretiermittel aufweisen, wobei *N* jede natürliche Zahl unter 20 sein kann. Vorzugsweise weist die Umfangsfläche acht Arretiermittel auf. Das wenigstens eine Arretiermittel kann als Einkerbungen in der Umfangsfläche ausgebildet sein. In einer Ausführungsform mit wenigstens zwei Arretiermitteln können die wenigstens zwei Arretiermittel als Einkerbungen ausgebildet sein, wobei der Schnittpunkt von durch die Einkerbungen gelegten Geraden auf der Mittelachse angeordnet ist. In einer Ausführungsform kann das wenigstens eine Arretiermittel als Ausbuchtung an der Umfangsfläche des Mittelteils ausgebildet sein. In einer Ausführungsform kann das wenigstens eine Arretiermittel als Teil eines Bajonettverschlusses ausgebildet sein. Der Mittelteil ist dazu geeignet das Anschlussstück mit einem Filterkorb zu verbinden, insbesondere drehfest zu verbinden. Das wenigstens eine Arretiermittel hat den Vorteil, dass das Anschlussstück einfach von einem Filterkorb getrennt und/oder mit einem Filterkorb gekoppelt werden kann. Dies erleichtert die Reinigung und vereinfacht die Handhabung.

Der Filterkorb umfasst eine erste Öffnung, eine zweite Öffnung, eine Ummantelung mit einer Innenwand und einer Außenwand, eine Bodenplatte, eine Mittelachse und wenigstens zwei Aussparungen. Die erste Öffnung ist größer als die zweite Öffnung. Der Filterkorb kann zu einer Aufnahme eines Filtermediums geeignet sein. In einer Ausführungsform kann der Filterkorb ohne Aussparungen ausgebildet sein. Das Filtermedium können beispielsweise Filtermatten oder Filterbälle sein. Der Filterkorb kann dazu geeignet sein von einem Fluid, insbesondere Wasser, durchströmt zu werden. Die erste Öffnung kann einen ersten Durchmesser und die zweite Öffnung kann einen zweiten Durchmesser aufweisen. Der Durchmesser der ersten Öffnung kann größer sein als der Durchmesser der zweiten Öffnung. Die erste Öffnung kann einen Außendurchmesser von 130mm - 160mm aufweisen. Vorzugsweise kann die erste Öffnung einen Außendurchmesser von 140mm - 150mm, besonders bevorzugt 141mm - 148mm aufweisen. Aufgrund von Fertigungstoleranzen können die bevorzugten und besonders bevorzugten Durchmesser um einen Betrag von +/- 2mm abweichen.

Die erste Öffnung und die zweite Öffnung können koaxial zur Mittelachse angeordnet sein. Die Mittelachse des Filterkorbs kann der Mittelachse des Anschlussstücks entsprechen. Der Filterkorb kann eine Umrandung aufweisen. Die Umrandung kann die erste Öffnung umgeben. Die Umrandung kann auf der Innenseite Randaussparungen aufweise. Die Randaussparungen können so ausgebildet sein, dass sie die Innenwandung nicht mit der Außenwand verbinden. Die zweite Öffnung ist in der Bodenplatte angeordnet. Die zweite Öffnung kann von der Bodenplatte umgeben sein. Die Bodenplatte kann eine der ersten Öffnung zugewandte Seite und eine der ersten Öffnung abgewandte Seite haben. Die Bodenplatte kann einen Außendurchmesser von 116mm - 156mm aufweisen. Vorzugsweise kann die Bodenplatte einen Außendurchmesser von 130mm - 140mm, besonders bevorzugt 134mm - 138mm aufweisen. Aufgrund von Fertigungstoleranzen können die bevorzugten und besonders bevorzugten Durchmesser um einen Betrag von +/- 2mm abweichen. Der Filterkorb kann sich ausgehend von der ersten Öffnung in Richtung der Bodenplatte verjüngen. Die wenigstens zwei Aussparungen gehen durch die Ummantelung hindurch. Die wenigstens zwei Aussparungen können die Innenwand mit der Außenwand verbinden. Die wenigstens zwei Aussparungen können als Schlitze ausgebildet sein. Die wenigstens zwei Aussparungen können parallel zur Mittelachse in axialer Richtung angeordnet sein. Die wenigstens zwei Aussparungen können parallel zueinander angeordnet sein. Die wenigstens zwei Aussparungen können ausgehend von der Umrandung in Richtung der zweiten Öffnung verlaufen. Die Aussparungen können ausgehend von der Innenfläche der Umrandung in Richtung der zweiten Öffnung verlaufen. Die wenigstens zwei Aussparungen können ausgehend von den Randaussparungen in Richtung der zweiten Öffnung verlaufen. Die Anzahl der Randaussparungen kann der Anzahl der Aussparungen entsprechen. Die wenigstens zwei Aussparungen können ausgehend von der ersten Öffnung in Richtung der zweiten Öffnung verlaufen. Die wenigstens zwei Aussparungen können über 50% der Distanz zwischen der ersten Öffnung und der zweiten Öffnung einnehmen. Die wenigstens zwei Aussparungen können 10% - 20%, 20% - 30%, 40% - 50%, 50% - 60%, 60% - 70%, 70% - 80% oder 80% - 90% der Distanz zwischen der ersten Öffnung und der zweiten Öffnung einnehmen. Durch die Aussparungen kann eine höhere Durchflussrate und zudem ein optimaler Filterbetrieb bei niedrigem Wasserstand gewährleistet werden. Zudem kann die Durchflussrate durch die Länge der Aussparungen angepasst und/oder optimiert werden. Auf diese Weise kann der Filterbetrieb optimiert werden. Die wenigstens zwei Aussparungen können eine Länge von 90mm - 170mm aufweisen. Bevorzugt können die wenigstens zwei Aussparungen eine Länge von 100mm - 120mm aufweisen. Besonders bevorzugt können die wenigstens zwei Aussparungen eine Länge von 109mm - 111mm aufweisen. Die wenigstens zwei Aussparungen können eine Länge von 90mm - 170mm aufweisen. Bevorzugt können die wenigstens zwei Aussparungen eine Länge von 100mm - 120mm aufweisen. Besonders bevorzugt können die wenigstens zwei Aussparungen eine Länge von 109mm - 111mm aufweisen. Bei einer Länge von 109mm - 111mm kann eine optimale Durchflussrate gewährleistet werden. Die wenigstens zwei Aussparungen können eine Breite von 5mm - 15mm aufweisen. Bevorzugt können die wenigstens zwei Aussparungen eine Breite von 10mm - 15mm aufweisen. Besonders bevorzugt können die wenigstens zwei Aussparungen eine Breite von 13mm - 14mm aufweisen. Bei einer Breite von 13mm - 14mm kann eine optimale Durchflussrate gewährleistet werden.

Der Filterkorb kann aus einem Kunststoff bestehen. Der Filterkorb kann aus dem ersten Material des Anschlussstücks bestehen. Der Filterkorb kann aus Polypropylen (PP) bestehen. In einer anderen Ausführungsform kann der Filterkorb beispielsweise aus Polyethylen (PE) bestehen. In einer weiteren Ausführungsform kann der Filterkorb aus einem Metall bestehen. Die Mittelachse des Filterkorbs kann der Mittelachse des Anschlussstücks entsprechen.

An der zweiten Öffnung des Filterkorbs kann wenigstens ein Arretiermittel zur Arretierung eines Anschlussstückes angeordnet sein. Das wenigstens eine Arretiermittel kann als Vorsprung in radialer Richtung in Richtung der Mittelachse ausgebildet sein. Das wenigstens eine Arretiermittel kann am Umfang der zweiten Öffnung angeordnet sein.

Die Bodenplatte kann auf der der ersten Öffnung abgewandten Seite einen Ringsteg aufweisen. Der Ringsteg kann um die zweite Öffnung angeordnet sein. Der Ringsteg kann die zweite Öffnung radial begrenzen. Das wenigstens eine Arretiermittel kann an dem Ringsteg angeordnet sein. Das wenigstens eine Arretiermittel des Filterkorbs kann komplementär zu dem wenigstens einen Arretiermittel des Anschlussstücks ausgebildet sein, wobei die Anzahl der Arretiermittel des Filterkorbs der Anzahl der Arretiermittel des Anschlussstücks entsprechen kann. Das wenigsten eine Arretiermittel des Filterkorbs kann als Vorsprung in radialer Richtung in Richtung der Mittelachse ausgebildet sein. Das wenigstens eine Arretiermittel kann auch als Steg, Noppe oder Ausbuchtung ausgebildet sein. In einer Ausführungsform kann das wenigstens eine Arretiermittel als Einkerbung ausgebildet sein. Beispielsweise kann der Filterkorb ein, zwei, drei, vier oder N Arretiermittel aufweisen, wobei *N* jede natürliche Zahl unter 20 sein kann. Vorzugsweise kann der Filterkorb acht Arretiermittel aufweisen. In einer Ausführungsform kann das wenigstens eine Arretiermittel als Teil eines Bajonettverschlusses ausgebildet sein.

Die Bodenplatte kann an der der ersten Öffnung zugewandten Seite einen aufweisen. Der Versatz kann um die zweite Öffnung angeordnet sein. Der Versatz kann eine Wölbung, eine Stufe oder ein Absatz sein.

Das Filtermodul kann einen Filterkorb und das Anschlussstück umfassen. Das Filtermodul kann in einem Whirlpool verwendet werden. Das Filtermodul kann in einer Filteranordnung eines Whirlpools verwendet werden. Das Filtermodul kann mit einem entsprechenden passenden Einlassanschluss einer Filteranordnung verbunden werden. Der Filterkorb kann eine erste Öffnung, eine zweite Öffnung, eine Ummantelung mit einer Innenwand und einer Außenwand eine Bodenplatte, eine Mittelachse umfassen. Die erste Öffnung ist größer als die zweite Öffnung. Der Durchmesser der ersten Öffnung kann größer sein als der Durchmesser der zweiten Öffnung. Die zweite Öffnung ist in der Bodenplatte angeordnet. Der Filterkorb kann mit Aussparungen oder ohne Aussparungen ausgebildet sein. Der Filterkorb kann dem zuvor beschriebenen Filterkorb entsprechen. Das Anschlussstück kann mit dem Filterkorb verbunden, insbesondere drehfest verbunden, sein. Das Anschlussstück kann mit dem Filterkorb kommunizierend verbunden sein. Der erste Durchgangskanal des Anschlussstücks und/oder der zweite Durchgangskanal des Anschlussstücks können mit dem Filterkorb kommunizierend verbunden sein. Der erste Durchgangskanal des Anschlussstücks und/oder der zweite Durchgangskanal des Anschlussstücks können mit dem der ersten Öffnung des Filterkorbs und/oder den wenigstens zwei Aussparungen kommunizierend verbunden sein. Der Filterkorb kann mit dem Anschlussstück lösbar verbunden sein. Der Filterkorb kann von dem Anschlussstück zerstörungsfrei getrennt werden. An der zweiten Öffnung des Filterkorbs kann wenigstens ein Arretiermittel zur Arretierung eines Anschlussstückes angeordnet sein. Das wenigstens eine Arretiermittel des Anschlussstücks kann mit dem wenigstens einen Arretiermittel des Filterkorbs in Eingriff stehen. Das wenigstens eine Arretiermittel des Filterkorbs kann in das wenigstens eine Arretiermittel des Anschlussstücks kontaktieren. Das wenigstens eine Arretiermittel des Filterkorbs kann in das wenigstens eine Arretiermittel des Anschlussstücks eingreifen. In einer anderen Ausführungsform können die wenigstens zwei Arretiermittel des Anschlussstücks können in die wenigstens zwei Arretiermittel des Filterkorbs eingreifen. Das Anschlussstück und der Filterkorb können in einer Ausführungsform auch durch einen Bajonettverschluss verbunden werden.

Das Anschlussstück kann in die zweite Öffnung des Filterkorbs eingesetzt werden. Das Anschlussstück kann eine Umfangsfläche der zweiten Öffnung des Filterkorbs kontaktieren. Das Mittelteil des Anschlussstücks kann an der Umfangsfläche der zweiten Öffnung des Filterkorbs anliegen. Die erste Außenöffnung des Anschlussstücks oder die zweite Außenöffnung des Anschlussstücks kann die zweite Öffnung des Filterkorbs sein. Die erste Außenöffnung des Anschlussstücks oder die zweite Außenöffnung des Anschlussstücks kann der Auslass des Filtermoduls sein. Die erste Öffnung des Filterkorbs und/oder die wenigstens zwei Aussparungen können der Einlass des Filtermoduls sein. Das Mittelteil des Anschlussstücks kann den Ringsteg des Filterkorbs kontaktieren. Der Mittelteil des Anschlussstücks kann am Ringsteg des Filterkorbs anliegen. Der erste Abschnitt oder der zweite Abschnitt kann auf der der ersten Öffnung des Filterkorbs abgewandten Seite der Bodenplatte angeordnet sein. Das Mittelteil kann mit der Bodenplatte bündig abschließen.

Ein zu filterndes Medium kann durch die erste Öffnung des Filterkorbs und/oder die wenigstens zwei Aussparungen in das Filtermodul einströmen durch die erste Außenöffnung des Anschlussstücks und/oder die zweite Außenöffnung des Anschlussstücks aus dem Filtermodul ausströmen. Ein zu filterndes Medium kann einen Strömungspfad durch den Filterkorb und das Anschlussstück ausbilden.

Das Anschlussstück und/oder der Filterkorb können im Spritzgussverfahren hergestellt. Eine Herstellung des Anschlussstücks und/oder des Filterkorbs im additiven Verfahren, wie beispielsweise 3D-Druck, ist ebenfalls möglich.

Das Anschlussstück kann in einem Whirlpool verwendet werden. Das Anschlussstück kann in einer Filteranordnung eines Whirlpools verwendet werden. Der erste Abschnitt mit der ersten Ummantelung oder der zweite Abschnitt mit der zweiten Ummantelung, kann mit einem entsprechenden passenden Einlassanschluss einer Filteranordnung verbunden werden. Der Einlassanschluss kann eine Schraub- oder Steckverbindung aufweisen. Das Anschlussstück kann in den entsprechenden Einlassanschluss eingebracht werden. Die Schraub- oder Steckverbindung des entsprechenden Einlassanschlusses kann in die erste Ummantelung oder zweite Ummantelung eingreifen. Die Schraub- oder Steckverbindung des Einlassanschlusses kann die erste Ummantelung oder zweite Ummantelung verformen. Die erste Ummantelung und/oder die zweite Ummantelung können sich der Form des Einlassanschlusses anpassen. So kann eine fluid- und/oder flüssigkeitsdichte Verbindung ausgebildet werden.

Der Filterkorb kann vor oder nach der Verbindung des Anschlussstücks mit dem entsprechenden Einlassanschluss mit dem Anschlussstück verbunden werden. Das Anschlussstück kann in den Filterkorb eingesetzt werden. Das Anschlussstück kann mit dem Mittelteil auf den Ringsteg des Filterkorbs angelegt werden. Die wenigstens zwei Arretiermittel des Filterkorbs können in die wenigstens zwei Arretiermittel des Anschlussstücks eingreifen und eine drehfeste Verbindung ausbilden. Das so entstandene Filtermodul kann in einer Filteranordnung eines Whirlpools verbunden werden. Es ist auch möglich das Anschlussstück zuerst mit einem entsprechenden passenden Einlassanschluss der Filteranordnung zu verbinden und den Filterkorb erst anschließend mit dem Anschlussstück zu verbinden, um so ein Filtermodul auszubilden. Das Anschlussstück kann je nach Form des Einlassanschlusses entweder mit der ersten Ummantelung und dem ersten Abschnitt in einen entsprechenden Einlassanschluss eingebracht werden, oder mit der zweiten Ummantelung und dem zweiten Abschnitt. Dies ist abhängig von der Beschaffenheit, wie beispielsweise dem Durchmesser, des Einlassanschlusses. Vor oder nach dem Anbringen des Filtermoduls kann ein Filtermedium in dem Filterkorb angeordnet werden. Bei dem Filtermedium kann es sich um Filtermatten, Filterbälle oder andere Medien handeln. Nach Installation des Filtermoduls kann ein zu filterndes Medium durch das Filtermodul strömen und das Medium kann gefiltert werden. Nach dem Trennen des Filtermoduls von der Filteranordnung vom Einlassanschluss kann die mit dem Whirlpool verbundene erste Ummantelung oder zweite Ummantelung wieder in ihre Ursprungsform zurückkehren.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt einen Schnitt durch eine Ausführungsform eines erfindungsgemäßen Anschlussstücks
- Figur 2: zeigt eine perspektivische Ansicht der Ausführungsform des erfindungsgemäßen Anschlussstücks von Fig. 1
- Figur 3: zeigt eine Draufsicht auf die Ausführungsform des erfindungsgemäßen Anschlussstücks von Fig. 1
- Figur 4: zeigt eine Seitenansicht der Ausführungsform des erfindungsgemäßen Anschlussstücks von Fig. 1
- Figur 5: zeigt eine Schnittdarstellung der Ausführungsform des erfindungsgemäßen Anschlussstücks von Fig. 1 in Verbindung mit einem Einlassanschluss einer ersten Variante einer Filteranlage
- Figur 6: zeigt eine Schnittdarstellung der Ausführungsform des erfindungsgemäßen Anschlussstücks von Fig. 1 in Verbindung mit einem Einlassanschluss einer zweiten Variante einer Filteranlage
- Figur 7: zeigt perspektivisch eine auseinander gezogene Darstellung der Ausführungsform eines erfindungsgemäßen Filtermoduls
- Figur 8: zeigt eine perspektivische Ansicht einer Ausführungsform eines erfindungsgemäßen Filterkorbs
- Figur 9: zeigt eine Draufsicht auf die Ausführungsform des erfindungsgemäßen Filtermoduls von Fig. 7
- Figur 10: zeigt eine perspektivische Ansicht der Ausführungsform des erfindungsgemäßen Filtermoduls von Fig. 7 mit der erfindungsgemäße Ausführungsform des Anschlussstücks von Fig. 1 in einer ersten Positionsvariante
- Figur 11: zeigt eine perspektivische Ansicht der Ausführungsform des erfindungsgemäßen Filtermoduls von Fig. 7 mit der erfindungsgemäße Ausführungsform des Anschlussstücks von Fig. 1 in einer zweiten Positionsvariante
- Figur 12: zeigt einen Längsschnitt der Ausführungsform des erfindungsgemäßen Filtermoduls von Fig. 7

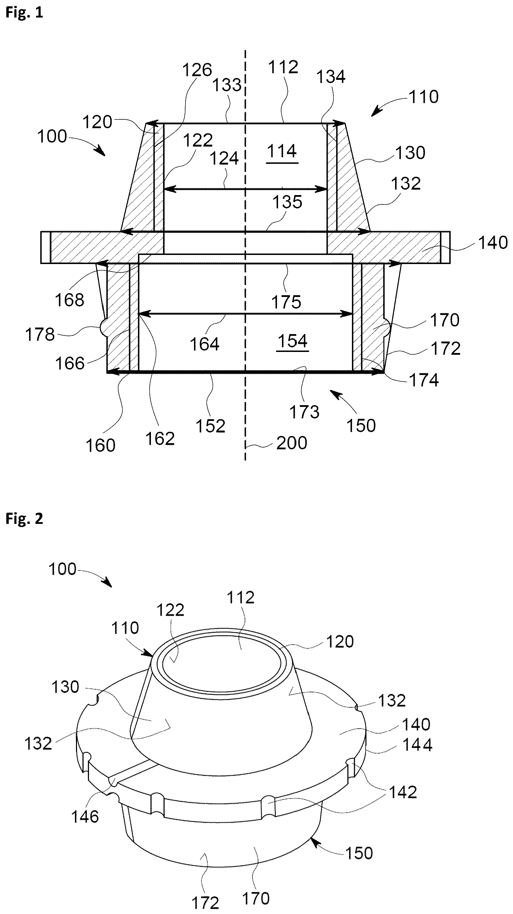

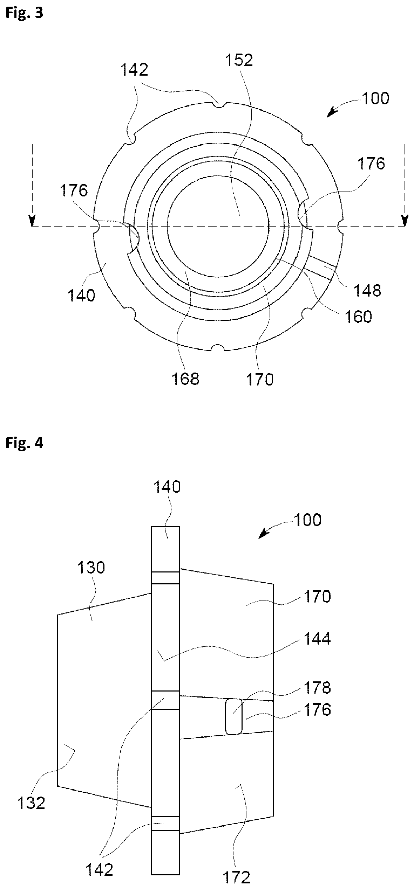

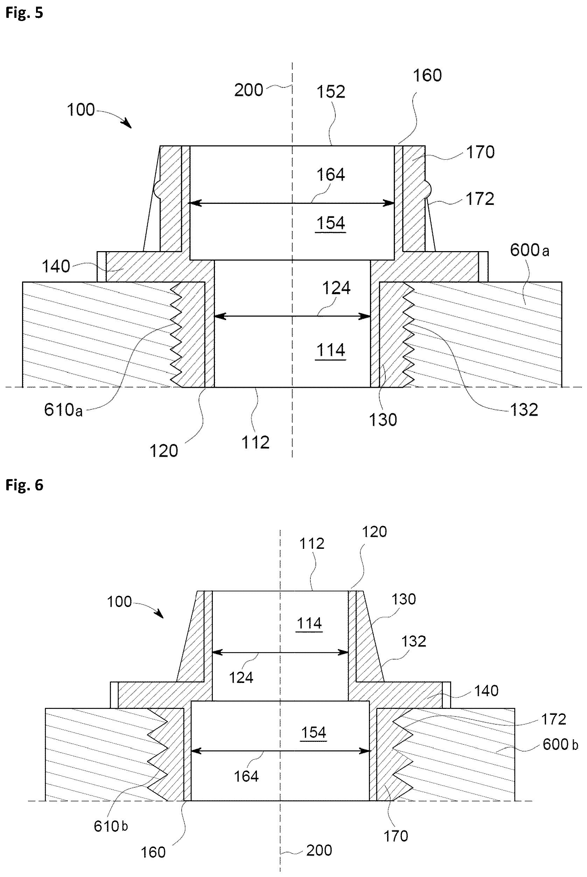

In Figur 1 ist ein Längsschnitt durch eine Ausführungsform eines erfindungsgemäßen Anschlussstücks 100 dargestellt. In Figur 2 eine perspektivische Ansicht einer Ausführungsform eines erfindungsgemäßen Anschlussstücks dargestellt. In Figur 3 ist eine Draufsicht einer Ausführungsform eines erfindungsgemäßen Anschlussstücks dargestellt. In Figur 4 ist eine Seitenansicht einer Ausführungsform eines erfindungsgemäßen Anschlussstücks dargestellt. In Figur 5 ist eine Schnittdarstellung der Ausführungsform des erfindungsgemäßen Anschlussstücks von Fig. 1 in Verbindung mit einem Einlassanschluss einer ersten Variante einer Filteranlage dargestellt. In Figur 6 ist eine Schnittdarstellung der Ausführungsform des erfindungsgemäßen Anschlussstücks von Fig. 1 in Verbindung mit einem Einlassanschluss einer zweiten Variante einer Filteranlage dargestellt.

Wie in Fig. 1 - 6 dargestellt, hat das Anschlussstück 100 hat einen ersten Abschnitt 120, einen mit dem ersten Abschnitt 120 verbundenen zweiten Abschnitt 160 und eine Mittelachse 200. Das Anschlussstück 100 ist dazu geeignet als ein Anschlussstück für eine Filteranordnung eines Whirlpools genutzt zu werden. Das Anschlussstück ist dazu geeignet mit einem entsprechenden passenden Einlassanschluss einer Filteranordnung verbunden werden.

Der erste Abschnitt 100 hat einen ersten in Richtung der Mittelachse 200 verlaufende Durchgangskanal 114 (erster Durchgangskanal), eine den ersten Durchgangskanal 114 umgebende erste Innenwandung 122 und eine erste Außenwandung 126. Der erste Durchgangskanal 114 hat eine Außenöffnung 112 (erste Außenöffnung). Durch die erste Außenöffnung 112 kann ein Fluid, beispielsweise Wasser in den ersten Durchgangskanal 114 eintreten oder aus dem ersten Durchgangskanal 114 austreten. Der erste Abschnitt 120 weist einen ersten Innendurchmesser 124 und einen ersten Außendurchmesser 125 auf.

Der zweite Abschnitt 160 hat einen zweiten in Richtung der Mittelachse 200 verlaufenden Durchgangskanal 154 (zweiter Durchgangskanal), eine den zweiten Durchgangskanal 154 umgebende zweite Innenwandung 162 und eine zweite Außenwandung 164. Der erste Durchgangskanal 114 und der zweite Durchgangskanal 154 sind kommunizierend verbunden. Der zweite Durchgangskanal 164 hat eine Außenöffnung 152 (zweite Außenöffnung). Durch die zweite Außenöffnung 152 kann ein Fluid, beispielsweise Wasser in den zweiten Durchgangskanal 154 eintreten oder aus dem Durchgangskanal 164 austreten. Der zweite Abschnitt 160 hat einen ersten Innendurchmesser 164 und einen ersten Außendurchmesser 165.

Der erste Abschnitt 120 ist mit dem zweiten Abschnitt 160 kommunizierend verbunden. Die erste Außenöffnung 112 des Anschlussstücks 100 kann der Einlass des Anschlussstücks 100 sein und die zweite Außenöffnung 152 des Anschlussstücks 100 kann der Auslass des Anschlussstücks 100 sein oder vice versa. Das Anschlussstück 100 bildet einen Fluidkanal aus, wobei die Strömungsrichtung des Fluids von der ersten Außenöffnung 112 zur zweiten Außenöffnung 152 oder von der der zweiten Außenöffnung 152 zur ersten Außenöffnung 112 verlaufen kann. Die erste Außenöffnung 112 und die zweite Außenöffnung 152 sind koaxial zu der Mittelachse 200 angeordnet. Der erste Durchgangskanal 114 und der zweite Durchgangskanal 154 sind koaxial zur Mittelachse 200 angeordnet. Der erste Innendurchmesser 124 ist kleiner als der zweite Innendurchmesser 164. Der erste Außendurchmesser 125 ist kleiner sein als der zweite Außendurchmesser 165.

Die erste Innenwandung 122 und die zweite Innenwandung 162 bilden jeweils eine kreiszylindrische Fläche aus. Die erste Außenwandung 126 und die zweite Außenwandung 166 bilden ebenfalls eine kreiszylindrische Fläche aus.

Die erste Innenwandung 122 und die zweite Innenwandung 162 und/oder die erste Außenwandung 126 und/oder die zweite Außenwandung 166 können aber auch kegelstumpfförmig ausgebildet sein.

Der erste Durchgangskanal 114 geht stufenförmig in den zweiten Durchgangskanal 154 über. Das Anschlussstück 100 bildet an diesem Übergang eine Ringstufe 168 aus. Die Ringstufe 168 ist durch die Differenz des ersten kleineren Innendurchmessers 124 und des zweiten größeren Innendurchmessers 164 ausgebildet. Die Ringstufe 168 unterteilt das Anschlussstück 100 in den ersten Abschnitt 120 und in den zweiten Abschnitt 160. Der erste Abschnitt 120 geht an der Ringstufe 128 in den zweiten Abschnitt 160 über.

Das Anschlussstück 100 weist ein Mittelteil 140 auf, das an der Verbindung des ersten Abschnitts 120 und des zweiten Abschnitts 160 ausgebildet ist. Das Mittelteil 140 ist als ringbundförmiger oder kranzförmiger Vorsprung ausgebildet und erstreckt sich senkrecht zur Mittelachse 200 radial weiter nach außen als der erste Abschnitt 120 und der zweite Abschnitt 160. Das Mittelteil 140 hat also einen größeren Außendurchmesser als der erste Außendurchmesser 125 und der zweite Außendurchmesser 165.

Der erste Abschnitt 120 und der zweite Abschnitt 160 sind durch das Mittelteil 140 verbunden. Das Mittelteil 140 ist mit dem ersten Abschnitt 120 und dem zweiten Abschnitt 160 einstückig ausgebildet.

Das Mittelteil 140 kann mit dem ersten Abschnitt 120 und/oder dem zweiten Abschnitt 160 aber durch einen Formschluss oder Stoffschluss verbunden sein.

Der erste Abschnitt 120 hat eine erste Ummantelung 130 und der zweite Abschnitt 160 hat eine zweite Ummantelung 170. Die erste Ummantelung 130 weist eine erste Außenmantelfläche 132 und einen ersten minimalen Außendurchmesser 133 auf und die zweite Ummantelung 170 weist eine zweite Außenmantelfläche 172 und einen zweiten minimalen Außendurchmesser 173 auf.

Die erste Ummantelung 130 weist innen eine erste Innenfläche 134 und die zweite Ummantelung 170 weist innen eine zweite Innenfläche 174 auf. Die erste Ummantelung 130 umgibt die erste Außenwandung 126 und die zweite Ummantelung 170 umgibt die zweite Außenwandung 166. Die erste Innenfläche 134 und die zweite Innenfläche 174 der jeweiligen Ummantelung 130, 170 liegen an der Außenwandung 126, 166 des jeweiligen Abschnitts 120, 160 an.

Die jeweilige Ummantelung 130, 170 kann mit dem jeweiligen Abschnitt 120, 160 durch einen Stoffschluss, oder Formschluss oder Reibschluss verbunden sein. Die erste Ummantelung 130 und die zweite Ummantelung 170 können zumindest teilweise am Mittelteil 140 anliegen.

Der erste Abschnitt 120 und der zweite Abschnitt 160 bestehen aus einem ersten Material. Die erste Ummantelung 130 und die zweite Ummantelung 170 bestehen aus einem zweiten Material. Das erste Material hat einen größeren mechanischen Widerstand aufweisen als das zweite Material. Das erste Material hat eine geringere Verformbarkeit, insbesondere elastische Verformbarkeit, als das zweite Material und/oder das erste Material weist eine größere Härte auf als das zweite Material. Das erste Material besteht aus einem härteren Material als das zweite Material.

Das erste Material und/oder das zweite Material können ein Kunststoff sein. Das erste Material kann Polypropylen (PP) sein. In einer Ausführungsform kann das erste Material Polyethylen (PE) sein. Das zweite Material kann ein Thermoplastisches Elastomer (TPE) sein. Das zweite Material kann eine SHORE Härte, vorzugsweise SHORE A Härte, von 10 - 70, bevorzugt 30 - 40 aufweisen, besonders bevorzugt 35 haben. Bei einer SHORE Härte von 30 - 40 kann ein Gewinde optimal die jeweilige Ummantelung (130; 170) verformen, ohne diese zu beschädigen. Bei einem Wert von 35 kann hierfür als optimal angesehen werden. Das Mittelteil 140 kann zumindest teilweise aus dem zweiten Material bestehen. Das Mittelteil 140 kann einen aus fertigungstechnischen Gründen ausgebildeten Kanal 146 mit dem zweiten Material aufweisen. Ein solcher Kanal 146 kann beispielsweise durch ein Spritzgussverfahren entstehen. In einer Ausführungsform kann das Mittelteil 140 aus dem zweiten Material bestehen.

Die Außenmantelflächen 132, 172 der Ummantelungen 130 bzw. 132 sind jeweils als Mantelfläche eines Kegelstumpfs ausgebildet, wobei die minimalen Außendurchmesser (133; 153) der Ummantelungen (130; 170) am dem Mittelteil 140 entgegengesetzten Ende der Abschnitte 120 bzw. 160 unterschiedlich groß sind.

Die erste Ummantelung 130 und die zweite Ummantelung 170 laufen konisch zu. Die erste Ummantelung 130 und die zweite Ummantelung 170 haben die Außenfläche eines Kreiskegelstumpfs. Die erste Außenmantelfläche 132 und die zweite Außenmantelfläche 172 sind als Mantelfläche eines Kreiskegelstumpfs ausgebildet.

In einer Ausführungsform kann die erste Außenmantelfläche 132 und/oder die zweite Außenmantelfläche 172 einen Kegelstumpf ausbilden und die erste Innenfläche 134 und/oder die zweite Innenfläche 174 können eine zylindrische, bevorzugt kreiszylindrische Fläche ausbilden. Die erste Ummantelung 130 und/oder die zweite Ummantelung 170 können konzentrisch um die Mittelachse 200 angeordnet sein.

Der maximale Außendurchmesser 135 der ersten Ummantelung 130 ist kleiner als der maximale Außendurchmesser 175 der zweiten Ummantelung 170. Der minimale Außendurchmesser 133 der ersten Ummantelung 130 ist kleiner sein der minimale Außendurchmesser 173 der zweiten Ummantelung 170. Der Außendurchmesser der ersten Ummantelung 130 nimmt ausgehend von der ersten Außenöffnung 112 entlang der Mittelachse 200 in Richtung des Mittelteils 140 kontinuierlich zu. Der Außendurchmesser der zweiten Ummantelung 170 nimmt ausgehend von der zweiten Außenöffnung 152 entlang der Mittelachse 200 in Richtung des Mittelteils 140 kontinuierlich zu. Die erste Ummantelung 130 verjüngt sich zum freien Ende des ersten Abschnitts 120 hin und die zweite Ummantelung 170 verjüngt sich zum freien Ende des zweiten Abschnitts 160 hin. Das jeweilige freie Ende entspricht dem Ende des jeweiligen Abschnitts 120; 160, dass nicht mit dem anderen Abschnitt verbunden ist. Die erste Ummantelung 130 verjüngt sich also zur ersten Außenöffnung 112 hin und die zweite Ummantelung 170 verjüngt sich zur zweiten Außenöffnung 152 hin.

Der Innendurchmesser der ersten Ummantelung 130 entspricht dem Außendurchmesser des ersten Abschnitts 120. Der Innendurchmesser der zweiten Ummantelung 170 entspricht dem Außendurchmesser des zweiten Abschnitts 160. Die erste Außenmantelfläche 132 und die zweite Außenmantelfläche 172 sind jeweils in einem Winkel zu der Mittelachse 200 ausgebildet. Die erste Außenmantelfläche 132 und die zweite Außenmantelfläche 172 weisen jeweils eine Mantellinie auf, die mir der Mittelachse 200 jeweils einen Winkel ausbildet. Der zwischen der Mantellinie der erste Außenmantelfläche 132 und der Mittelachse 120 ausgebildete Winkel (erster Winkel) ist kleiner sein als der zwischen der Mantellinie der zweiten Außenmantelfläche 172 und der Mittelachse 200 ausgebildete Winkel (zweiter Winkel). Der erste Winkel und der zweite Winkel sind spitze Winkel. Bevorzugt kann der erste Winkel 3° - 10° betragen, besonders bevorzugt 5° - 7°. Bevorzugt kann der zweite Winkel 7° - 12° betragen, besonders bevorzugt 8° - 10°.

Wie Fig. 5 und 6 zeigen, ist das Anschlussstück 100 geeignet mit einem entsprechend passenden Einlassanschluss 600a bzw. 600b einer Filteranlage eines Whirlpools verbunden zu werden, um eine fluiddichte und/oder flüssigkeitsdichte Verbindung herzustellen.

In Fig. 5 ist der Einlassanschluss 600a mit einem Feininnengewinde 610a versehen während in Fig. 6 der der Einlassanschluss 600b ein Grobinnengewinde 610b aufweist.

In Fig. 5 ist das Anschlussstück 100 in einer ersten Position mit dem ersten Abschnitt 120 so in das Feininnengewinde 610a eingesetzt, dass die erste Ummantelung 130 durch das Feininnengewinde 610a elastisch verformt wird, wobei das Material der ersten Ummantelung 130 so in das Feininnengewinde 610a eindringt, dass eine fluiddichte Verbindung geschaffen wird. Das Mittelteil 140 liegt auf der Oberfläche des Einlassanschlusses 600a auf. Wird die Verbindung wieder gelöst, kann die erste Ummantelung 130 wieder in die Ursprungsform zurückkehren.

In Fig. 6 ist das Anschlussstück 100 in einer zweiten Position mit dem zweiten Abschnitt 160 so in das Grobinnengewinde 610b eingesetzt, dass die zweite Ummantelung 170 durch das Grobinnengewinde 610b elastisch verformt wird, wobei das Material der zweiten Ummantelung 170 so in das Grobinnengewinde 610b eindringt, dass eine fluiddichte Verbindung geschaffen wird. Das Mittelteil 140 liegt auf der Oberfläche des Einlassanschlusses 600b auf. Wird die Verbindung wieder gelöst, kann die zweite Ummantelung 170 wieder in die Ursprungsform zurückkehren.

Der minimale Außendurchmesser der jeweiligen Ummantelung 130; 170 ist kleiner als der Innendurchmesser des entsprechenden Einlassanschlusses 600a; 600b, um eine einfache Einführung in das Gewinde des entsprechenden Einlassanschlusses zu gewährleisten, wenn das Anschlussstück 100 in das Gewinde des entsprechenden Einlassanschlusses eingebracht, vorzugsweise eingedreht wird.

Das Anschlussstück 100 kann somit unabhängig von der Gewindeeigenschaft des Einlassanschlusses 600a, 600b eine fluiddichte und/oder flüssigkeitsdichte Verbindung ausbilden. Die erste Ummantelung 130 und die zweite Ummantelung 170 können eine größere Dicke als die Gewindehöhe des Einlassanschlusses 600a, 600b aufweisen.

Das Anschlussstück 100 kann für Feingewinde, Regelgewinde und/oder Grobgewinde verwendet werden. Das Anschlussstück 100 kann für rechtsgängige und/oder linksgängige Gewindearten verwendet werden. Das Anschlussstück kann SAE, UNF und/oder NPT-Gewindearten verwendet werden.

Da die Außendurchmesser der Ummantelungen 130, 170 unterschiedlich groß sind, kann das Anschlussstück 100 für Gewinde mit unterschiedlichen Innendurchmessern verwendet werden

Die zweite Ummantelung 170 weist diametral gegenüberliegend jeweils eine Nut 176 auf. Die Nuten 176 verlaufen entlang der zweiten Ummantelung 170 in axialer Richtung. Die Nuten 176 weisen jeweils ein Feststellelement 178 auf, das in der Nut 176 angeordnet ist. Das Feststellelement 178 ist als Vorsprung ausgebildet, kann aber auch ein Steg, eine Noppe, oder eine Ausbuchtung in der wenigstens einen Nut 176 sein. Das Feststellelement 178 erstreckt sich radial senkrecht zur Mittelachse 200 und erstreckt sich durchgehend zwischen den Wänden der Nut 176. Dadurch ist es alternativ möglich das Anschlussstück 100 mit einem Einlassanschluss über eine Steckverbindung zu verbinden, der zur Drehsicherung zu den Nuten 176 komplementäre Vorsprünge aufweist, die in die Nuten 176 eingreifen, wobei die Feststellelemente 178 gegen die Vorsprünge gedrückt werden, um in diesem Bereich eine fluiddichte Abdichtung zu schaffen. Das Feststellelement 178 ist so ausgebildet, dass es auch dann eine fluiddichte Abdichtung schafft, wenn der zweite Abschnitt 160, wie in Fig. 6 gezeigt, in ein Gewinde eingesetzt ist.

Abhängig von dem Einsatzzweck können auch eine oder mehrere Nuten 176 mit Feststellelementen 178 in der zweiten Ummantelung 170 ausgebildet werden. Ebenso ist es möglich entsprechende Nuten 176 mit Feststellelementen 178 auch in der ersten Ummantelung 130 des ersten Abschnitts 120 auszubilden.

Je nach Anwendungsfall kann der erste Abschnitt 120 oder der zweite Abschnitt 160 also mit verschiedenen Einlassanschlüssen verbunden werden. Dies ist abhängig vom Außendurchmesser der Gewinde und/oder des Verbindungsmittels. So ist es möglich das Anschlussstück 100 mit Einlassanschlüssen 600a, 600b vielfältiger Art und Gewindegröße zu verbinden, um eine fluiddichte und/oder flüssigkeitsdichte Verbindung herzustellen. Das Anschlussstück 100 stellt somit ein unabhängig von der Gewindeart einsetzbares Anschlussstück dar, welches günstig, einfach zu handhaben und universell einsetzbar ist.

Das Mittelteil 140 weist eine Umfangsfläche 144 auf. Mehrere Arretiermittel 142 sind an der Umfangsfläche 144 des Mittelteils 140 angeordnet.

Die Umfangsfläche 144 kann auch ein, zwei, drei, vier oder N Arretiermittel 142 aufweisen, wobei N jede natürliche Zahl unter 20 sein kann. Vorzugsweise weist die Umfangsfläche 144 acht Arretiermittel 142 auf, wie dies in den Figuren gezeigt ist. Das wenigstens eine Arretiermittel 142 ist als Einkerbungen in der Umfangsfläche 144 ausgebildet sind.

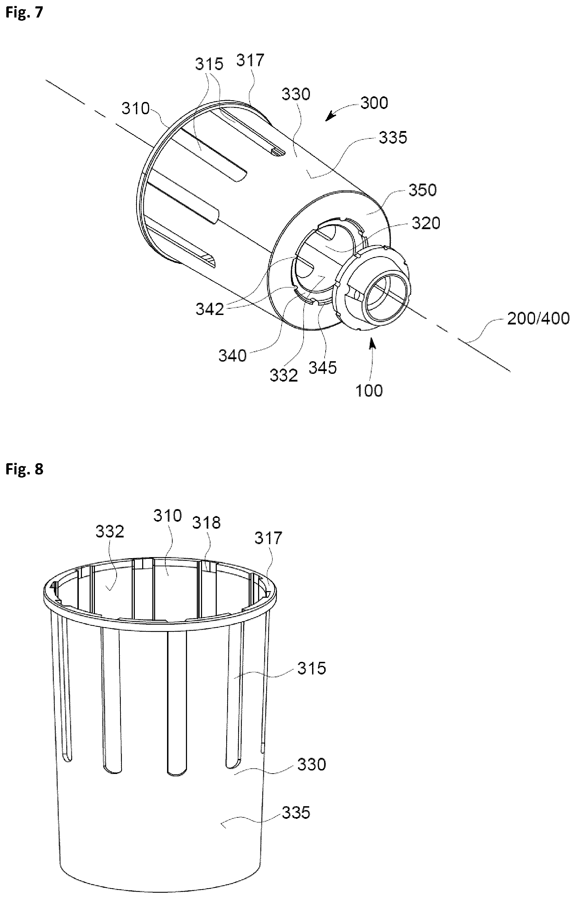

In Figur 7 ist eine auseinander gezogene Darstellung einer Ausführungsform eines erfindungsgemäßen Filtermoduls 500 mit Anschlussstücks 100 und Filterkorb 300 dargestellt. In Figur 8 ist eine perspektivische Ansicht einer Ausführungsform eines erfindungsgemäßen Filterkorbs 300 dargestellt.

Wie in Figuren 7 und 8 dargestellt, umfasst der Filterkorb 300 eine erste obere Öffnung 310, eine zweite, in einer unteren Bodenplatte 350 ausgebildete untere Öffnung 320, eine Ummantelung 330 mit einer Innenwand 332 und einer Außenwand 335, eine Mittelachse 400 und wenigstens zwei Aussparungen 315 (in Fig. 7 und 8 acht Aussparungen 315). Der Durchmesser der ersten Öffnung 310 ist größer als der Durchmesser der zweiten Öffnung 320. Die erste Öffnung 310 und die zweite Öffnung 320 sind koaxial zur Mittelachse angeordnet können aber auch versetzt zu dieser angeordnet sein. Der Filterkorb 300 weist am oberen Ende eine sich nach außen erstreckende Umrandung 317 auf. Die Mittelachse des Filterkorbs 300 entspricht der Mittelachse des Anschlussstücks 100, kann aber auch versetzt zu dieser angeordnet sein. Die Umrandung 317 umgibt die erste Öffnung 310. Die Umrandung 317 weist auf der Innenseite Randaussparungen 318 auf. Die Randaussparungen 318 sind so ausgebildet, dass sie die Ummantelung 330 unterbrechen. Die zweite Öffnung 320 ist von der Bodenplatte 350 umgeben. Die Bodenplatte 350 hat eine der ersten Öffnung 310 zugewandte Seite und eine der ersten Öffnung 310 abgewandte Seite. Die wenigstens zwei Aussparungen 315 gehen durch die Ummantelung 330 zwischen Außenwand 335 und Innenwand 332 hindurch. Die wenigstens zwei Aussparungen 335 sind als Schlitze ausgebildet, können aber auch eine andere Form aufweisen, wie z.B. Öffnungen jeglicher Form. Die wenigstens zwei Aussparungen 315 sind parallel zur Mittelachse 400 in axialer Richtung parallel zueinander angeordnet. Die wenigstens zwei Aussparungen 315 verlaufen ausgehend von den Randaussparungen 318 in Richtung der zweiten Öffnung 320, wobei die Anzahl der Randaussparungen 318 der Anzahl der Aussparungen 315 entspricht.

Die wenigstens zwei Aussparungen 315 erstrecken sich über 50% der Distanz zwischen der ersten Öffnung und der zweiten Öffnung. Sie können sich aber auch 10% - 20%, 20% - 30%, 40% - 50%, 50% - 60%, 60% -70%, 70% - 80% oder 80% - 90% der Distanz zwischen der ersten Öffnung 310 und der zweiten Öffnung 320 erstrecken.

In einer Ausführungsform kann der Filterkorb 300 auch ohne Aussparungen 315 ausgebildet sein. In diesem Fall sollte sichergestellt sein, dass immer ein ausreichender Wasserpegel im Whirlpool vorhanden ist.

Der Filterkorb 300 besteht aus einem Kunststoff, vorzugsweise dem ersten Material. Andere Materialien, wie z.B. Stahl, ein Metall sind auch möglich.

Wie es in den Fig. 7 und 8 gezeigt ist, sind an der zweiten Öffnung 320 des Filterkorbs 300 Arretiermittel 342 zur Arretierung des Anschlussstückes 100 an dem Filterkorb 300 angeordnet. Die Arretiermittel 342 sind am Umfangsrand der zweiten Öffnung 320 als Vorsprung in radialer Richtung in Richtung der Mittelachse 400 ausgebildet.

Die Bodenplatte 350 weist oberhalb der Arretiermittel 342 einen koaxial zur zweiten Öffnung 320 angeordneten Ringsteg 340 auf, der eine Öffnung bildet, deren Durchmesser geringer ist als der Durchmesser der zweiten Öffnung 320, wodurch eine Anlagefläche für den Mittelsteg 140 des Anschlussstücks 100 gebildet wird. Der Ringsteg 340 ist über einen koaxialen Ringabschnitt 345 mit der Bodenplatte verbunden, dessen Innendurchmesser dem Innendurchmesser der Bodenplatte 350 entspricht. Der Abstand des Ringstegs 350 zur der der ersten Öffnung 310 abgewandten Seite der Bodenplatte 350 entspricht der Dicke des Mittelteils 140. Die Arretiermittel 342 des Filterkorbs 300 sind komplementär zu dem wenigstens einen Arretiermittel 142 des Anschlussstücks 100 ausgebildet, wobei die Anzahl der Arretiermittel 342 des Filterkorbs 300 der Anzahl der Arretiermittel 142 des Anschlussstücks 100 entspricht, und die Arretiermittel 342 in demselben Winkelabstand zueinander um die Mittelachse 400 angeordnet sind wie die Arretiermittel 142 um die Mittelachse 200.

Das wenigstens eine Arretiermittel 342 kann auch als Steg, Noppe oder Ausbuchtung ausgebildet sein. Der Filterkorb kann ein, zwei, drei, vier oder N Arretiermittel 342 umfassen, die am Ringsteg 340 angeordnet sind, wobei *N* jede natürliche Zahl unter 20 sein kann. Die Arretiermittel 342 sind so anzuordnen, dass sie mit einem Arretiermittel 142 in Eingriff kommen können, wenn das Anschlussstück 100 in die zweite Öffnung 320 eingesetzt wird.

Grundsätzlich ist es auch möglich die Arretiermittel an der zweiten Öffnung 320 als Einbuchtungen und die Arretiermittel am Umfang des Mittelteils 140 als Vorsprünge auszubilden, die in die Einbuchtungen eingreifen, wenn das Anschlussstück 100 in die zweite Öffnung 320 eingesetzt wird.

Vorzugsweise kann der Filterkorb 300 acht Arretiermittel 342 aufweisen, wie es in den Fig. 7 und 8 gezeigt ist. In diesem Fall entspricht die Anzahl der Arretiermittel 342 der Anzahl der Arretiermittel 142. Grundsätzlich kann der Filterkorb 300 aber auch nur ein Arretiermittel 342 aufweisen, das einen relative Drehung zwischen Anschlussstück 100 und Filterkorb 300 verhindert.

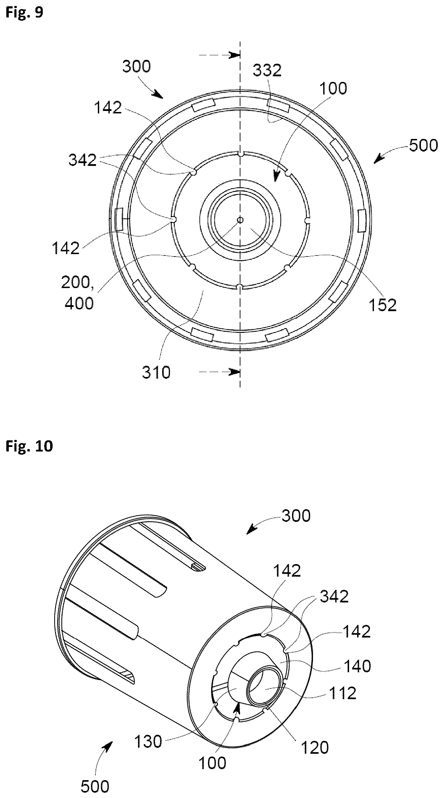

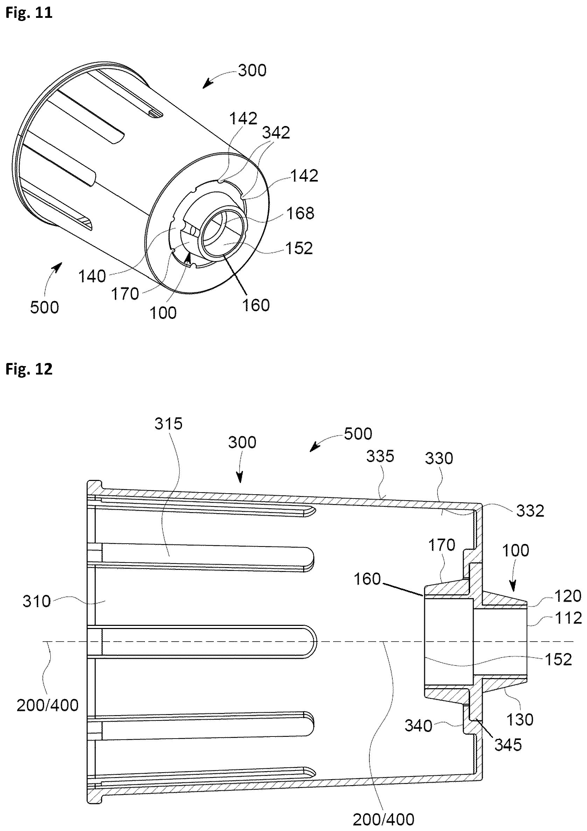

Wie in den Figuren 9 - 12 gezeigt, wird das Anschlussstück 100 zur Bildung des Filtermoduls 500 abhängig von der Form eines Einlassanschlusses mit dem ersten Abschnitt 120 (Fig.11) oder mit dem zweiten Abschnitt 160 (Fig.10) in die zweite Öffnung 320 eingeführt, bis der Mittelteil 140 an dem Ringsteg 340 zum Anliegen kommt. Dabei wird das Anschlussstück 100 so um seine Mittelachse 200 gedreht, dass die Arretiermittel 142 in Eingriff mit den Arretiermitteln 342 kommen, wodurch eine drehfeste Verbindung zwischen Filterkorb 300 und Anschlussstück 100 gebildet wird. Das Mittelteil 140 schließt vorzugsweise mit der Bodenplatte 350 auf der der ersten Öffnung 310 abgewandten Seite bündig ab.

Anschließend wird das montierte Filtermodul 500 mit dem entsprechenden Einlassanschluss, z.B. mit einem Einlassanschluss 600a, 600b, verbunden, wie es in den Fig.5 und 6 gezeigt ist.

Es ist auch möglich, zunächst das Anschlussstück 100 an einem Einlassanschluss 600a, 600b anzuordnen und daraufhin den Filterkorb 300 mit dem Anschlussstück 100 drehfest zu verbinden

### Bezugszeichenliste

- 100: Adapter
- 110: erste Position
- 120: erster Abschnitt
- 112: Erste Außenöffnung
- 114: erster Durchgangskanal
- 122: Innenwandung des ersten Abschnitts
- 124: erster Innendurchmesser
- 125: erster Außendurchmesser
- 126: Außenwandung des ersten Abschnitts
- 130: erste Ummantelung
- 132: Außenmantelfläche der ersten Ummantelung
- 133: minimaler Außendurchmesser
- 134: Innenfläche der ersten Ummantelung
- 135: maximaler Außendurchmesser
- 140: Mittelteil
- 142: Arretiermittel
- 144: Umfangsfläche Mittelteil
- 146: Einkerbung
- 150: zweite Position
- 152: Zweite Außenöffnung
- 154: zweiter Durchgangskanal
- 160: zweiter Abschnitt
- 162: Innenwandung des zweiten Abschnitts
- 164: zweiter Innendurchmesser
- 165: zweiter Außendurchmesser
- 168: Ringstufe
- 170: Zweite Ummantelung
- 172: Außenmantelfläche der zweiten Ummantelung
- 173: minimaler Außendurchmesser
- 174: Innenfläche der zweiten Ummantelung
- 175: maximaler Außendurchmesser
- 176: Nut
- 178: Feststellelement
- 200: Mittelachse Anschlussstück
- 300: Filterkörper
- 310: erste Öffnung
- 315: Aussparungen
- 317: Umrandung
- 318: Randaussparung
- 320: zweite Öffnung
- 330: Ummantelung
- 332: Innenwandung
- 335: Außenwand
- 340: Ringsteg
- 342: Arretiermittel
- 345: Ringabschnitt
- 400: Mittelachse Filterkorb
- 500: Filtermodul
- 600a: Einlassanschluss 1. Variante
- 600b: Einlassanschluss 2. Variante
- 610a,b: Gewinde Einlassanschluss

## Patentansprüche

1. Anschlussstück (100), umfassend einen ersten Abschnitt (120), einen mit dem ersten Abschnitt verbundenen zweiten Abschnitt (160) und eine Mittelachse (200),
wobei der erste Abschnitt (120) einen ersten insgesamt in Richtung der Mittelachse verlaufenden Durchgangskanal (114), eine den ersten Durchgangskanal (114) umgebende erste Innenwandung (122) und eine erste Außenwandung (121) aufweist, und
wobei der zweite Abschnitt (160) einen zweiten insgesamt in Richtung der Mittelachse verlaufenden Durchgangskanal (154), eine den zweiten Durchgangskanal (154) umgebende zweite Innenwandung (162) und eine zweite Außenwandung (161) aufweist, wobei der erste Durchgangskanal (114) und der zweite Durchgangskanal (154) kommunizierend verbunden sind, wobei eine erste Ummantelung (130) die erste Außenwandung (121) und eine zweite Ummantelung (170) die zweite Außenwandung (161) umgibt, und
wobei die erste Ummantelung (130) eine erste Außenmantelfläche (132) und einen ersten minimalen Außendurchmesser (133) aufweist und die zweite Ummantelung (170) eine zweite Außenmantelfläche (172) und einen zweiten minimalen Außendurchmesser (173) aufweist und die Außenmantelflächen (132; 172) der Ummantelungen (130; 170) jeweils als Mantelfläche eines Kegelstumpfs ausgebildet sind, wobei die minimalen Außendurchmesser (133; 173) der Ummantelungen (130; 170) unterschiedlich groß sind,
wobei der erste Abschnitt (120) und der zweite Abschnitt (160) aus einem ersten Material gebildet sind und die erste Ummantelung (130) und die zweite Ummantelung (170) aus einem zweiten Material gebildet,
wobei das erste Material einen größeren mechanischen Widerstand aufweist als das zweite Material;
**dadurch gekennzeichnet, dass**
an der Verbindung des ersten Abschnitts (120) und des zweiten Abschnitts (160) ein Mittelteil (140) ausgebildet ist, wobei das Mittelteil (140) sich wenigstens teilweise weiter nach außen erstreckt als der erste Abschnitt (120) und der zweite Abschnitt (160), und
wobei das Mittelteil (140) eine Umfangsfläche (144) aufweist, wobei wenigsten ein Arretiermittel (142) an der Umfangsfläche (144) des Mittelteils (140) angeordnet ist.

2. Anschlussstück (100) nach Anspruch 1,
**dadurch gekennzeichnet, dass**
das der erste Durchgangskanal (114) stufenförmig in den zweiten Durchgangskanal (154) übergeht.

3. Anschlussstück (100) nach einem der vorhergehenden Ansprüche,
**dadurch gekennzeichnet, dass**
das Mittelteil (140) mit dem ersten Abschnitt (120) und/oder dem zweiten Abschnitt (160) einstückig ausgebildet ist.

4. Anschlussstück nach einem der vorhergehenden Ansprüche,
**dadurch gekennzeichnet, dass**
das wenigstens eine Arretiermittel (142) als Einkerbung in der Umfangsfläche (144) ausgebildet ist.

5. Filtermodul umfassend ein Anschlussstück (100) nach den Ansprüchen 1-4, und
einen Filterkorb (300) umfassend eine erste Öffnung (310), eine zweite Öffnung (320), eine Ummantelung (330) mit einer Innenwand (332) und einer Außenwand (335), eine Bodenplatte (350) und eine Mittelachse (400) wobei die erste Öffnung (310) größer ist als die zweite Öffnung (320) wobei die zweite Öffnung (320) in der Bodenplatte (350) angeordnet ist, wobei das Anschlussstücks (100) mit dem Filterkorb (300) kommunizierend verbunden ist.

6. Filtermodul nach Anspruch 5,
**dadurch gekennzeichnet, dass** das Anschlussstück (100) mit dem Filterkorb (300) drehfest verbunden ist.

7. Filtermodul nach Anspruch 5 und 6,
**dadurch gekennzeichnet, dass**
der erste Abschnitt (120) oder der zweite Abschnitt (160) des Anschlussstückes (100) auf der der ersten Öffnung (310) des Filterkorbs (300) abgewandten Seite der Bodenplatte (350) angeordnet ist.

8. Filtermodul nach Anspruch 5 bis 7 umfassend ein Anschlussstück nach Anspruch 1 oder 4,
**dadurch gekennzeichnet, dass**
an der zweiten Öffnung (320) des Filterkorbs (300) wenigstens ein Arretiermittel (342) zur Arretierung eines Anschlussstückes (100) angeordnet ist, und das wenigstens eine Arretiermittel (142) des Anschlussstücks (100) mit dem wenigstens einen Arretiermittel (342) des Filterkorbs (300) in Eingriff steht

## Claims

1. Connecting piece (100), comprising a first section (120), a second section (160) connected to the first section, and a central axis (200),
wherein the first section (120) has a first passage channel (114) extending generally in the direction of the central axis, a first inner wall (122) surrounding the first passage channel (114), and a first outer wall (121), and
wherein the second section (160) has a second passage channel (154) extending generally in the direction of the central axis, a second inner wall (162) surrounding the second passage channel (154), and a second outer wall (161), wherein the first passage channel (114) and the second passage channel (154) are connected in a communicating manner,
wherein a first sheath (130) surrounds the first outer wall (121) and a second sheath (170) surrounds the second outer wall (161), and
wherein the first sheath (130) has a first outer shell surface (132) and a first minimum outer diameter (133) and the second sheath (170) has a second outer shell surface (172) and a second minimum outer diameter (173), and the outer shell surfaces (132; 172) of the sheaths (130; 170) are each designed as a lateral surface of a truncated cone, wherein the minimum outer diameters (133; 173) of the sheaths (130; 170) are of different sizes,
wherein the first section (120) and the second section (160) are formed of a first material and the first sheath (130) and the second sheath (170) are formed of a second material,
wherein the first material has a greater mechanical resistance than the second material,
**characterized in that**
at the connection of the first section (120) and the second section (160) a central part (140) is formed, wherein the central part (140) extends at least partially further outwards than the first section (120) and the second section (160), and
wherein the central part (140) has as circumferential surface (144),
wherein at least one locking means (142) is arranged at the circumferential surface (144) of the central part (140).

2. Connecting piece (100) according to claim 1,
**characterized in that**
the first passage channel (114) transitions in a stepped manner into the second passage channel (154).

3. Connecting piece (100) according to one of the preceding claims,
**characterized in that**
the central part (140) is formed in one piece with the first section (120) and/or the second section (160).

4. Connecting piece (100) according to one of the preceding claims,
**characterized in that**
the at least one locking means (142) is formed as a notch in the circumferential surface (144).

5. Filter module comprising a connecting piece (100) according to claims 1 - 4, and a filter basket (300) comprising a first opening (310), a second opening (320), a sheath (330) with an inner wall (332) and an outer wall (335), a base plate (350), and a central axis (400),
wherein the first opening (310) is larger than the second opening (320),
wherein the second opening (320) is arranged in the base plate (350),
wherein the connecting piece (100) is connected to the filter basket (300) in a communicating manner.

6. Filter module according to claim 5,
**characterized in that** the connecting piece (100) is connected to the filter basket (300) in a rotationally fixed manner.

7. Filter module according to claim 5 and 6,
**characterized in that**
the first section (120) or the second section (160) of the connecting piece (100) is arranged on the side of the base plate (350) facing away from the first opening (310) of the filter basket (300).

8. Filter module according to claims 5 to 7 comprising a connecting piece according to claim 1 or 4,
**characterized in that**
at least one locking means (342) for locking a connecting piece (100) is arranged at the second opening (320) of the filter basket (300),
and the at least one locking means (142) of the connecting piece (100) engages with the at least one locking means (342) of the filter basket (300).

## Revendications

1. Raccord (100) comprenant une première partie (120), une deuxième partie (160) assemblée avec la première partie et un axe médian (200),
dans lequel la première partie (120) comporte un premier canal de passage (114) orienté globalement dans la direction de l'axe médian, une première paroi intérieure (122) entourant le premier canal de passage (114) et une première paroi extérieure (121) et
dans lequel la deuxième partie (160) comporte un deuxième canal de passage (154) orienté globalement dans la direction de l'axe médian, une deuxième paroi intérieure (162) entourant le deuxième canal de passage (154) et une deuxième paroi extérieure (161), le premier canal de passage (114) et le deuxième canal de passage (154) étant reliés en communication,
dans lequel une première enveloppe (130) entoure la première paroi extérieure (121) et une deuxième enveloppe (170) la deuxième paroi extérieure (161) et
dans lequel la première enveloppe (130) présente une première surface d'enveloppe extérieure (132) et un premier diamètre extérieur minimal (133) et la deuxième enveloppe (170) une deuxième surface d'enveloppe extérieure (172) et un deuxième diamètre extérieur minimal (173) et les surfaces d'enveloppe extérieures (132 ; 172) des enveloppes (130 ; 170) sont conçues chacune comme la surface d'enveloppe d'un tronc de cône, les diamètres extérieurs minimaux (133 ; 173) des enveloppes (130 ; 170) étant de taille différente,
dans lequel la première partie (120) et la deuxième partie (160) sont faites d'un premier matériau et la première enveloppe (130) et la deuxième enveloppe (170) d'un deuxième matériau,
dans lequel le premier matériau présente une plus grande résistance mécanique que le deuxième matériau,
**caractérisé en ce qu'**une partie médiane (140) est formée sur l'assemblage de la première partie (120) et de la deuxième partie (160), laquelle partie médiane (140) s'étend au moins en partie plus loin vers l'extérieur que la première partie (120) et la deuxième partie (160),
la partie médiane (140) comportant une surface périphérique (144),
au moins un moyen de blocage (142) étant disposé sur la surface périphérique (144) de la partie médiane (140).

2. Raccord (100) selon la revendication 1, **caractérisé en ce que** le premier canal de passage (114) forme un gradin à sa transition avec le deuxième canal de passage (154).

3. Raccord (100) selon l'une des revendications précédentes, **caractérisé en ce que** la partie médiane (140) est formée d'une pièce avec la première partie (120) et/ou la deuxième partie (160).

4. Raccord selon l'une des revendications précédentes, **caractérisé en ce que** l'au moins un moyen de blocage (142) est conçu comme une encoche dans la surface périphérique (144).

5. Module de filtre comprenant un raccord (100) selon les revendications 1-4 et une crépine de filtre (300) comprenant une première ouverture (310), une deuxième ouverture (320), une enveloppe (330) avec une paroi intérieure (332) et une paroi extérieure (335), une plaque de fond (350) et un axe médian (400), dans lequel la première ouverture (310) est plus grande que la deuxième ouverture (320), la deuxième ouverture (320) étant disposée dans la plaque de fond (350), dans lequel le raccord (100) est relié en communication avec la crépine de filtre (300).

6. Module de filtre selon la revendication 5, **caractérisé en ce que** le raccord (100) est assemblé de manière solidaire en rotation avec la crépine de filtre (300).

7. Module de filtre selon les revendications 5 et 6, **caractérisé en ce que** la première partie (120) ou la deuxième partie (160) du raccord (100) est disposée sur la face de la plaque de fond (350) tournée à l'opposé de la première ouverture (310) de la crépine de filtre (300).

8. Module de filtre selon les revendications 5 à 7 comprenant un raccord selon la revendication 1 ou 4, **caractérisé en ce qu'**au moins un moyen de blocage (342) est disposé sur la deuxième ouverture (320) de la crépine de filtre (300) pour bloquer un raccord (100) et l'au moins un moyen de blocage (142) du raccord (100) est en prise avec l'au moins un moyen de blocage (342) de la crépine de filtre (300).
